(19) **Europäisches Patentamt**

**European Patent Office**

**Office européen des brevets**

(11) **EP 1 372 340 B1**

(12) **EUROPEAN PATENT SPECIFICATION**

(45) Date of publication and mention
of the grant of the patent:
**13.12.2006 Bulletin 2006/50**

(51) Int Cl.:
***H04N 5/57*** *(2006.01)*

(21) Application number: **03021074.4**

(22) Date of filing: **21.05.1999**

(54) **Method and apparatus for dynamic contrast improvement in video pictures**

Verfahren und Vorrichtung zur dynamischen Kontrastverbesserung in Videobildern

Méthode et appareil d'amélioration dynamique du contraste dans des images vidéo

(84) Designated Contracting States:
**DE FR GB IT**

(30) Priority: **02.06.1998 EP 98109976**

(43) Date of publication of application:
**17.12.2003 Bulletin 2003/51**

(62) Document number(s) of the earlier application(s) in
accordance with Art. 76 EPC:
**99109999.5 / 0 963 112**

(73) Proprietor: **DEUTSCHE THOMSON-BRANDT
GMBH**
**78048 Villingen-Schwenningen (DE)**

(72) Inventor: **Akbayir, Sahmusa**
**78052 Villingen-Schwenningen (DE)**

(74) Representative: **Schäferjohann, Volker**
**Deutsche Thomson-Brandt GmbH,**
**Licensing & Intellectual Property,**
**Karl-Wiechert-Allee 74**
**30625 Hannover (DE)**

(56) References cited:
**EP-A- 0 390 179        EP-A- 0 512 341**
**US-A- 4 057 828**

**Description**

The invention relates to a method and apparatus for dynamic contrast improvement of video pictures.

Background

In the field of video display design there is a strong demand for picture contrast but each video display has a limited dynamic range. Especially the flat display panels like LCD and plasma displays have a lower dynamic range compared to the CRT displays. The picture contrast can't be increased by simply increasing the video signal amplitude because exceeding the display dynamic range causes unwanted disturbing effects.

From EP-A-0 390 179 a dynamic range video black level expander is known in which the dynamic range of the video signal is the criterion for the expansion. The disclosed apparatus has means for determining the dynamic range of a video signal, means establishing a tilt-point video signal level as a function of the dynamic range and means for expanding portions of said digital video signal that are below said tilt-point video signal level.

Invention

It is an object of the invention to disclose a method and an apparatus that increases the picture quality when using dynamic contrast improvement.

This object is achieved by the measures claimed in claims 1 and 7. According to the claimed solution in claim 1 the picture quality is optimised by performing a step of adaptive signal splitting in which a noise reduced luminance signal is generated to which a transfer function is applied afterwards. This step includes a step of adaptive coring of the high pass component of the luminance signal, with the coring level being adaptive to the signal to noise ratio of the luminance signal.

According to claim 7, the adaptive signal splitter includes an adaptive coring unit, in which the high pass component of the luminance signal is reduced from noise and small detail signal components adaptive to an estimate of the signal to noise ratio of the luminance signal by applying a corresponding coring level to the high pass component.

Advantageous additional embodiments of the inventive method and apparatus are disclosed in the respective dependent claims.

According to claim 8 the adaptive signal splitter comprises a low pass filter in which the luminance signal is filtered and the low pass component of the signal is fed to an image analysis unit. The low pass filtered signal is used for image analysis in order to reduce the noise influence.

A further improvement can be achieved with the measures disclosed in claim 9. Adding the noise and small details enclosing signal component which has been cut by the adaptive coring unit to the resulting output signal after applying the transfer function allows for a reduction of the noise amplification without a loss of small detail signals. Since the coring function does not distinguish between noise and image signals, a sharpness loss would have been caused otherwise due to the missing of high frequency small amplitude signal components.

In order to compensate for the effect of the processing of the luminance component on the colour saturation it is advantageous to provide a colour saturation compensation unit which processes the chrominance signals accordingly to compensate for this effect, see claim 10.

Drawings

Exemplary embodiments of the invention are illustrated in the drawings and are explained in more detail in the following description. In the figures:

Figure 1      shows a graph with a dual segment transfer function used for contrast improvement;
Figure 2      shows a top level block diagram of the apparatus for dynamic contrast improvement;
Figure 3      shows a block diagram of an adaptive signal splitter;
Figure 4      shows a block diagram of a low pass filter used in the adaptive signal splitter;
Figure 5      shows a block diagram of an adaptive coring unit used in the adaptive signal splitter;
Figure 6      shows a block diagram of an image analysis unit;
Figure 7      shows a block diagram of an average brightness analysis unit included in the image analysis unit;
Figure 8      shows a block diagram of a dark sample distribution analysis unit included in the image analysis unit;
Figure 9      shows a block diagram of a frame peak analysis unit included in the image analysis unit;
Figure 10      shows a block diagram of an IIR filter unit and a parameter computation unit included in the image analysis unit;
Figure 11      shows a block diagram of a transfer function adaptation unit and

Figure 12    shows a block diagram of a colour saturation compensation unit;

<u>Exemplary Embodiments</u>

The basic function of the dynamic contrast improvement method DCI according to the invention is to analyse the picture framewise in real time and adjust the parameters of a transfer function depending on the analysis results for the best subjective picture quality. As the luminance signal component of a video signal determines mainly the picture contrast, the new dynamic contrast improvement method applies only the luminance signal to the transfer function which assigns to each luminance signal point (pixel of the video picture) an output value thus resulting in improved picture contrast and quality.

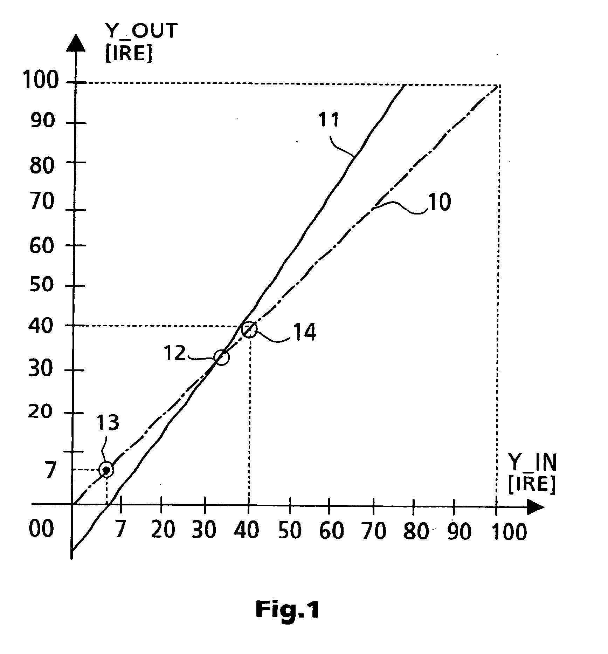

This process is shown in Fig. 1. Therein, the effect of the transfer function is shown. In the x-direction of the shown graph the input luminance values Y_IN are depicted. In the y-direction of the shown graph the output luminance values are shown. In both cases the luminance values are given in IRE (institute of radio engineers) units which is an often used unit in the field of video signal processing. A luminance signal with 100 IRE represents the white level of a standard video signal and a luminance signal with 0 IRE represents the black level of a standard video signal.

For the different kinds of displays special adjustments are available so that for a standard video signal test pattern the optimum black and white colours are reproduced. When in video films e.g. dark scenes occur, the displayed video pictures may have low contrast values irrespective of the special adjustments and the pictures seem to be unclear or foggy or the like. So, there is a strong demand of dynamic contrast improvement. When no contrast improvement is made, the transfer function will have the form of a straight line with slope 1, see reference number 10 in Fig. 1.

According to the invention a dual segment transfer function with an adaptive pivot point is used, see reference number 11. The two segments may have different slopes and the adaptive pivot point 12 is the point of intersection of the two segment lines. The parameters of the dual segment transfer function are the two slope values of both segments (hereafter called segment gain value) and the location of the pivot point 12. The lower segment is for dark samples and the upper segment for light samples.

The gain of the lower segment is adaptive to the dark sample distribution. A higher gain results from fewer dark samples and a lower gain from a higher number of dark samples. The gain is limited in the range as given below:

$$1.0 \leq Segment1\_Gain \leq Max\_Gain1$$

In a preferred embodiment of the invention *Max_Gain1* is the value 1.5.

The gain of the upper segment is adaptive to the frame peak value. It is computed in the way that the detected peak value lower than the nominal, will be moved in the direction of the nominal peak value. If the detected peak value is equal or higher than the nominal peak value than a gain of 1.0 is used (no change). The computed theoretical gain is limited then to a maximum value in order to avoid unnatural effects.

$$1.0 \leq Segment2\_Gain \leq Max\_Gain2$$

In a preferred embodiment of the invention *Max_Gain2* is the value 1.7.

The third parameter of the transfer function is the pivot point. It is adaptive to the average image brightness and allows to make dark pictures contrasty and light. Low average brightness moves the pivot point to lower and high average brightness to higher level. In Fig. 1 it is shown that for ease of implementation the pivot point always lies on the straight line 10 and the lowest possible location is the point (x=7 IRE, y=7 IRE) and the highest possible location is the point (x=40 IRE, y=40 IRE), see reference signs 13 and 14.

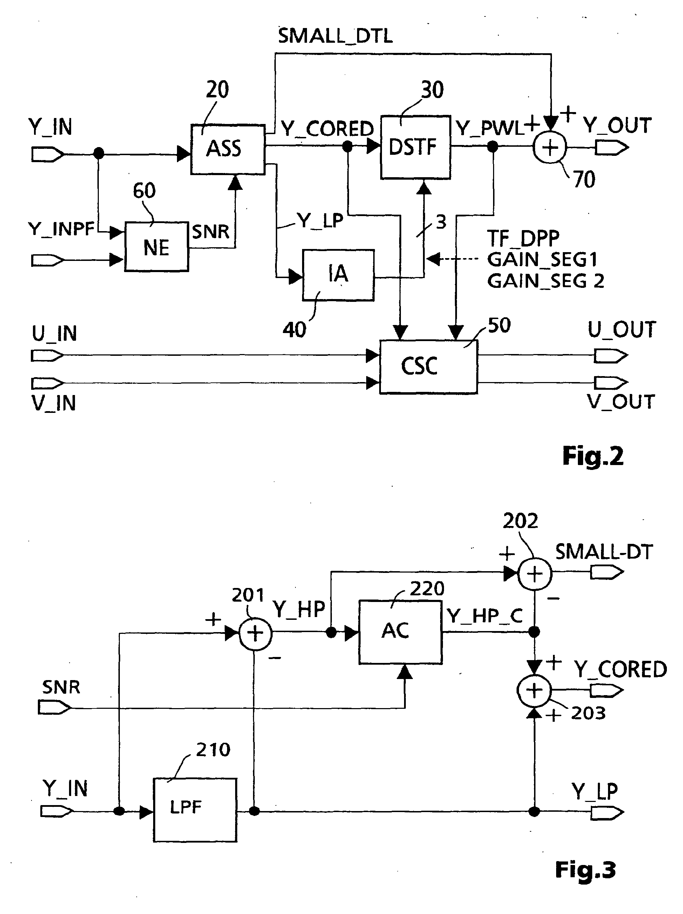

Hereinafter, the apparatus for dynamic contrast improvement according to the invention is explained in detail. Fig. 2 shows the top level block diagram of this apparatus. It consists of 5 main blocks adaptive signal splitter 20, transfer function adaptation unit 30, image analysis unit 40, colour saturation unit 50 and noise estimator 60. Four input signals are supplied to the apparatus. Luminance signal Y_IN of the video signal, luminance signal Y_INPF from the previous field and the chrominance signals U_IN and V_IN. From these signals three output signals are generated. These are a modified luminance signal Y_OUT, and modified chrominance signals U_OUT and V_OUT. These signals may be used for further processing or displaying.

Next the function of the adaptive signal splitter is explained. It consists of the main parts low pass filter 210 and adaptive coring unit 220. This block prepares the luminance signal adaptive to the signal to noise ratio of the luminance signal and provides the three different signals SMALL_DTL, Y_CORED and Y_LP needed for future processing. As shown in Fig. 3, the luminance signal Y_IN is filtered with a low pass filter 210. The low pass filtered signal Y_LP is provided for the use in the image analysis unit 40 as shown in Fig. 2. The high pass component of the luminance signal is generated simply by subtracting the low pass filtered signal Y_LP from the incoming signal Y_IN in adder 201. The high pass signal Y_HP is applied to the adaptive coring unit 220 where the noise and detail signals below the coring level are removed. The coring level is determined by an estimate of the signal to noise ratio SNR provided from block 60 in Fig. 2. The output signal Y_HP_C of the adaptive coring unit 220 is added to the low pass signal Y_LP in adder 203. The result is a noise reduced signal Y_CORED. This signal is provided to the transfer function unit 30 for further processing.

Since the coring function does not distinguish between noise and image signals, a sharpness loss will be caused due to the omission of high frequency small amplitude image signals. Therefore, the signal amount SMALL_DTL cut by the coring unit 220, is added to the processed signal Y_PWL after the whole DCI-processing again, see Fig. 2. This procedure allows to reduce the noise amplification without a loss of small_detail signals.

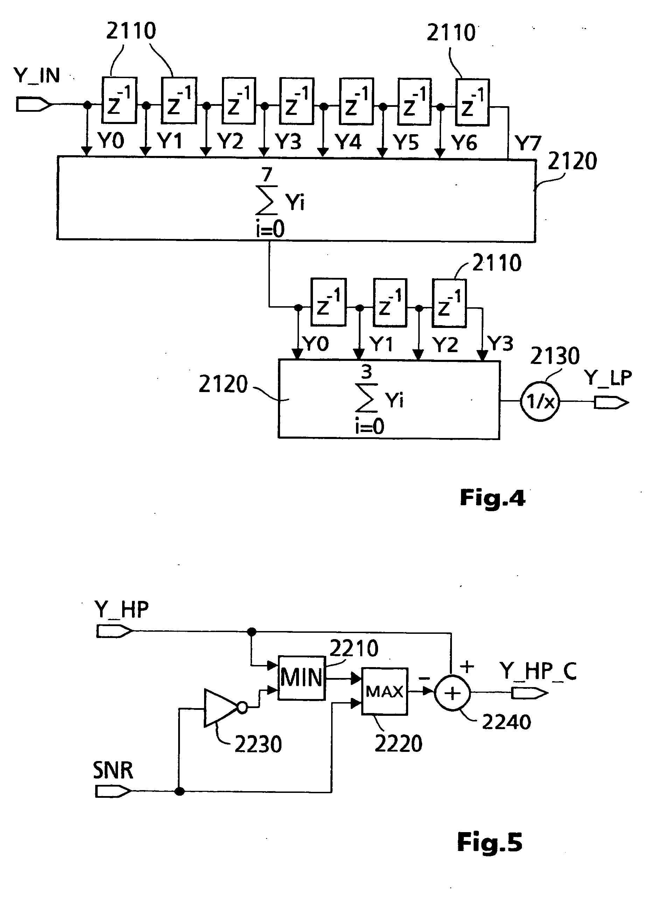

The structure of the low pass filter is shown in Fig. 4 Its a common low pass filter structure. Therein, reference number 2110 denotes delay units, reference number 2120 denotes summation stages and reference number 2130 denotes a division stage. The low pass filter has a -3 dB frequency limit at about 700 kHz.

The structure of the adaptive coring unit 220 is shown in Fig. 5. Therein reference number 2210 denotes a minimum value selector and reference number 2220 denotes a maximum value selector. Reference number 2230 denotes an inverting unit which performs a multiplication with the factor -1 and reference number 2240 an adder. The function of the adaptive coring unit 220 is shown self explanatory in Fig. 5.

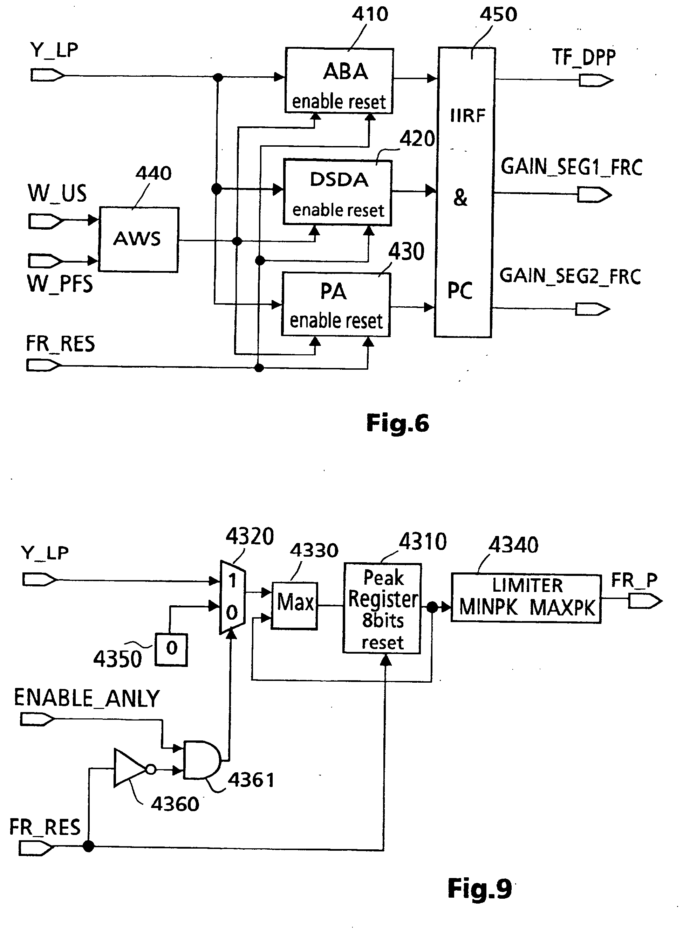

Next, the image analysis unit 40 is explained in greater detail. The basic function of the dynamic contrast improvement process DCI is to analyse the picture framewise in real time and adjust the parameters of a dual segment transfer function depending on the analysis results for the best subjective picture quality. Each image frame is analysed for three different characteristics. The image average brightness, the dark sample distribution and the frame peak value. A block diagram of the image analysis unit 40 is shown in Fig. 6. Reference numbers 410, 420, 430 denotes an average brightness analysis unit, a dark sample distribution analysis unit and a frame peak analysis unit. The output results of these units are processed in a IIR filtering and parameter computation unit 450. After the processing in this unit the parameters of the dual segment transfer function are achieved and they are applied to the next frame not to the current frame because a filtering is necessary anyhow and an instantaneous reaction on small temporal variations is unwanted.

In TV sets, the picture format may be changed in applications like zooming or when a different picture format like letterbox format is received. When a letterbox transmission is received, not all areas of the display include active video portions. In zooming applications it is often the case that not all active video lines are displayed. Therefore care must be taken, that the image analysis function is not falsified by inactive portions or portions which are not displayed. For this purpose an analysis window is defined in analysis window unit 440. The analysis window defines a part within the displayed picture size for analysis. The analysis for DCI functions is enabled within the window and disabled outside the window. In this way it is also possible to disable the analysis in subtitles and logos. The analysis window may be defined by user setting W_US or automatically by a unit which detects the picture format and size W_PFS.

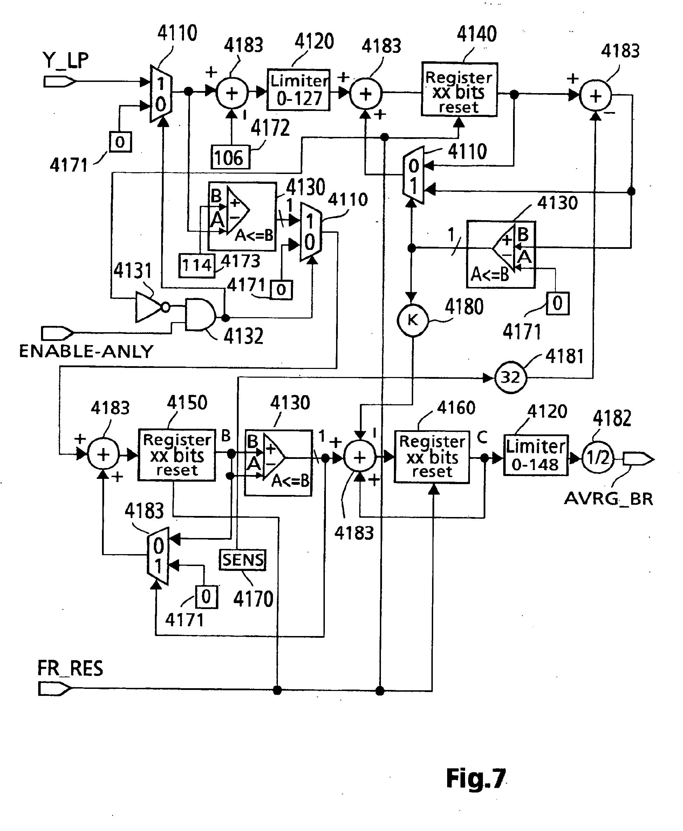

Next the average brightness analysis unit 410 is described in detail. The pivot point of the dual segment transfer function is adaptive to the average image brightness value. It is moved to lower values for dark pictures (having low average brightness values) and it is moved to higher values for light pictures (having higher average brightness values). The analysis is done as shown in Fig. 7. All samples below the dark level threshold value =114 in constant memory 4173 are considered as dark samples. The register 4150 is increased by one for every such a sample. When the register value is equal to the parameter value SENS in variable memory 4170 then it is reset and a carryover of one is added to the average register 4160.

All samples higher than a light level threshold value =106 stored in constant memory 4172 are considered as light samples but they are not simply counted like the dark samples. The sample values of them are also taken into consideration for analysis. The register 4140 is increased by a value of

$$value = \lim it((Y\_LP - threshold), \ 0, \ 127)$$

as long as the register value is lower than the constant value SENS*32. When the value in register 4140 is equal or higher than 32*SENS than it is updated by a value

$$register\_A = \mathrm{lim}it((Y\_LP - threshold),0,127) + (register\_A - 32 * SENS)$$

and a carryover of K is subtracted from the content in average register 4160 according to the formula

$$register\_C = register\_C - K$$

The reason for using two difference thresholds for decision between dark and light samples is the desired soft transition. Both threshold values =114 and =106 overlap in a small range called transition range. All the samples within the transition range are considered by both dark and light sample counters represented by registers 4150 and 4140. The average brightness analysis function can be described by equation given below:

$$register\_C = \frac{tsn * p_{dark}}{SENS} - K * \frac{tsn * \sum_{i=1}^{127} p_i * i}{32 * SENS}$$

wherein the variables have the following meanings:

| | | |
|---|---|---|
| tsn | : | total sample number within analysis window |
| pdark | : | dark sample number related to tsn |
| Pi | : | light sample number, with a value i of i=limit((sample-threshold),0,127), related to tsn |
| SENS | : | parameter; determines the sensitivity |
| K | : | parameter; weighting factor |

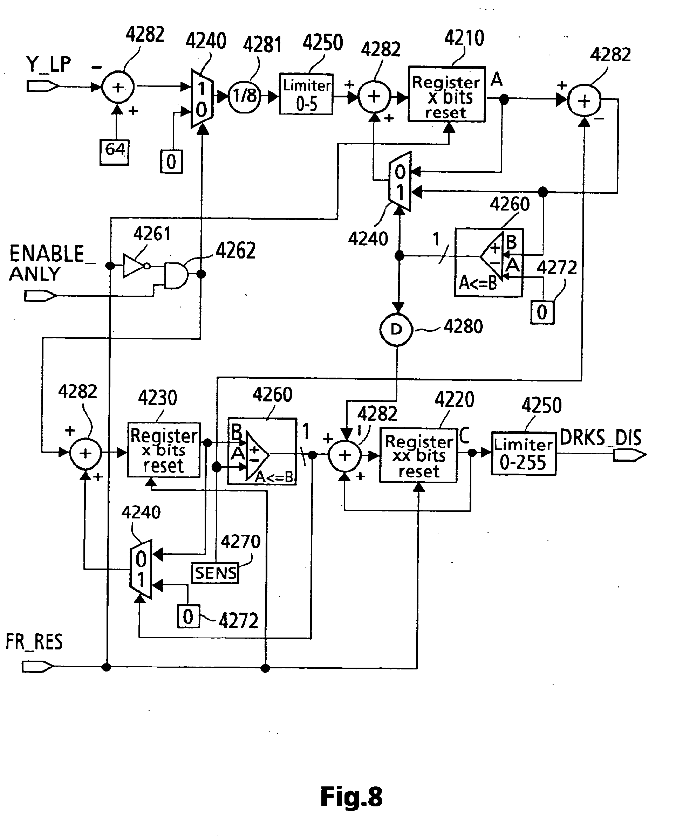

The analysis is done framewise and only for samples within the analysis window. At the end of this analysis the register 4160 contains the information about the average image brightness. The result is limited in limiter 4120 according to the given range and divided by 2 in division stage 4182. The final average brightness information determines the position of the transfer function pivot point. All the registers are reset by the frame reset pulse before the analysis for the next frame starts. Now the function of the dark sample distribution analysis unit 420 is explained by referring to Fig. 8. The amplitude range from 0 IRE up to about 18 IRE is quantized in 5 steps for dark sample distribution analysis. Samples with amplitude values up to 18 IRE are considered as dark samples. Their quantized values are counted in register 4210 as long as the register value is lower than the parameter value SENS in constant memory 4270. If the register value is equal or higher than the parameter value SENS then it is updated by a value calculated according to the below given formula:

$$register\_A = \mathrm{lim}it\left(\frac{(threshold - Y\_LP)}{8}, \ 0, \ 5\right) + (register\_A - SENS)$$

and a carryover with a value of D is subtracted from the distribution register 4220. The register 4230 counts the total sample number. It's value is increased for every sample inside the analysis window by the value of one. It is reset to zero and a carryover of one is added to register 4220 if the counted sample number is equal to the parameter value SENS.

The analysis is done framewise only for samples within the analysis window. At the end of this analysis the register 4220 contains information about the dark sample distribution and determines the segment gain of the lower segment of the dual segment transfer function. Also here, all the registers are reset before the analysis for the next frame starts.

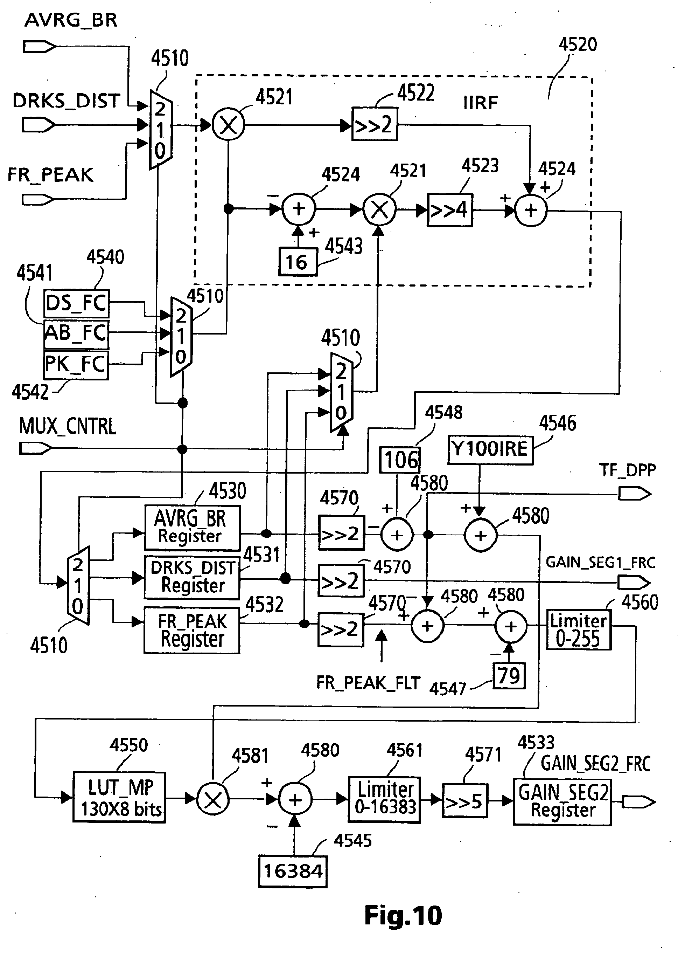

Next the function of the frame peak analysis unit 430 is explained by referring to Fig. 9. The maximum frame peak value is detected by the circuit disclosed in Fig. 9. Each time, the maximum value is stored in register 4310. The detected frame peak value is limited to a certain range so that the segment gain, which is computed in another block, never goes below the value 1.0 and never exceeds a predefined maximum value. The frame peak value determines the gain of the second segment of the dual segment transfer function as will be explained later on.

The image analysis unit provides information for each frame about the average brightness, dark sample distribution and frame peak value. These values determine the characteristic of the transfer function used for the next frame. All these three values are filtered with an IIR filter (Infinite Impulse Response Filter) and stored framewise. The filter unit is denoted with the reference sign 4520 in Fig. 10. It consists of multipliers 4521, bit shifters 4522 and 4523 which divide the input samples by the factors $2^2=4$ and $2^4=16$ respectively, adders 4524 and constant memory 4543. The filter time constants are determined by the user settings AB_FC for average brightness values, DS_FC for dark sample distribution values and PK_FC for peak values in respective variable memories 4540, 4541 and 4542. The filtering of all three image analysis values is done in time multiplexed fashion with the same hardware as shown in Fig. 10. A multiplex control signal MUX_CTRL switches the corresponding multiplexers 4510. All the computations in the filtering and parameter computation unit 450 are done within the vertical blanking time.

The filtered values are used to compute the parameters of the dual segment transfer function. The filtered average brightness information is divided by 4 and then subtracted from a constant value of 106. The result is the pivot point value (TF_DPP). The filtered dark sample distribution value provides the gain for the first segment (lower segment) of the dual segment transfer function, also after division by 4 in bit shifter 4570. An additional processing is necessary in order to get the gain for the second segment (upper segment), derived from the filtered peak value. The gain is computed so that the filtered peak values, lower than 100 IRE, are transferred to 100 IRE. As explained above, the detected peak value has been limited in frame peak analysis unit 430 to a certain range so that the segment gain never goes below 1.0 and never exceeds a predefined maximum value, e.g. 1.7. The maximum gain is defined in respect to preserving natural picture quality. These conditions are expressed in mathematical form below:

$$peak = \lim it(peak, \ MINPEAK, \ 100 IRE)$$
$$1.0 \le GAIN\_SEG2 \le \max\_gain2$$

The gain is determined, as given in equation below, by the filtered peak value and the pivot point position.

$$GAIN\_SEG2 = \frac{Y100IRE - TF\_DPP}{FR\_PEAK\_FILT - TF\_DPP}$$

Therein, the variables stand for:

| | | |
|---|---|---|
| GAIN_SEG2 | : | Segment-2 gain for dual segment transfer function |
| Y100IRE | : | Luminance signal 100 IRE value |
| TF_DPP | : | Transfer function pivot point value |
| FR_PEAK_FILT | : | Filtered luminance peak value |

The computation of the segment gain according to this equation requires a division operation. That can be done with a multiplier 4581 and a lookup table 4550. The look-up table contains the results of

$$\frac{1}{FR\_PEAK\_FILT - TF\_DPP}$$

with a precision of n bits, as given in table below:

$$X = FR\_PEAK\_FILT - TF\_DPP$$

$$X_{min} = FR\_PEAK\_FILT_{min} - TF\_DPP_{max}$$

$$X_{max} = FR\_PEAK\_FILT_{max} - TF\_DPP_{min}$$

$$ROM\_Address = X - X_{min}$$

$$ROM\_Value = \frac{2^n}{X} \qquad\qquad n: \quad number \ of \ fraction \ bits$$

for $FR\_PEAK\_FILT_{min} = 185$ $\qquad\qquad$ $FR\_PEAK\_FILT_{max} = 240$

$$\Rightarrow \qquad TF\_DPP_{min} = 32 \qquad\qquad TF\_DPP_{max} = 106$$

| X=FR_PEAK_FILT-TF_DPP | ROM_Address=X-Xmin | ROM_Value=$2^n$/X for n = 14 |
|---|---|---|
|  |  |  |
| 79 | 0 | 207 |
| 80 | 1 | 204 |
| 81 | 2 | 202 |
| . | . | . |
| . | . | . |
| 206 | 127 | 79 |
| 207 | 128 | 79 |
| 208 | 129 | 78 |

The transfer function segment for luminance signals higher than the pivot point is given by the equation

$$Yout = gain\_seg2 * (Y_{in} - TF\_DPP) + TF\_DPP \qquad\qquad Y_{in} > TF\_DPP$$

wherein

Yout $\qquad$ : $\qquad$ Output luminance signal
Yin $\qquad$ : $\qquad$ Input luminance signal.

When the segment gain is split into integer and fraction part wherein the integer part is always 1, the following formulas apply:

$$GAIN\_SEG2 = GAIN\_SEG2\_INT + GAIN\_SEG2\_FRC = 1 + GAIN\_SEG2\_FRC$$

$$Y_{out} = GAIN\_SEG2\_FRC * (Y_{in} - TF\_DPP) + Y_{in} \qquad Y_{in} > TF\_DPP$$

Using only the fraction part saves one bit. Therefore, the integer part is subtracted from the computed gain. The result is written into the register 4533. The computed parameters TF_DPP, GAIN_SEG1_FRC and GAIN_SEG2_FRC, determine the transfer function dynamic pivot point, fraction part of segment gain 1 and fraction part of segment gain2. They are supplied to the dual segment transfer function unit. The computation has to be completed at latest before the first active data of the next frame. The parameters are frozen during the flow of active data of the frame.

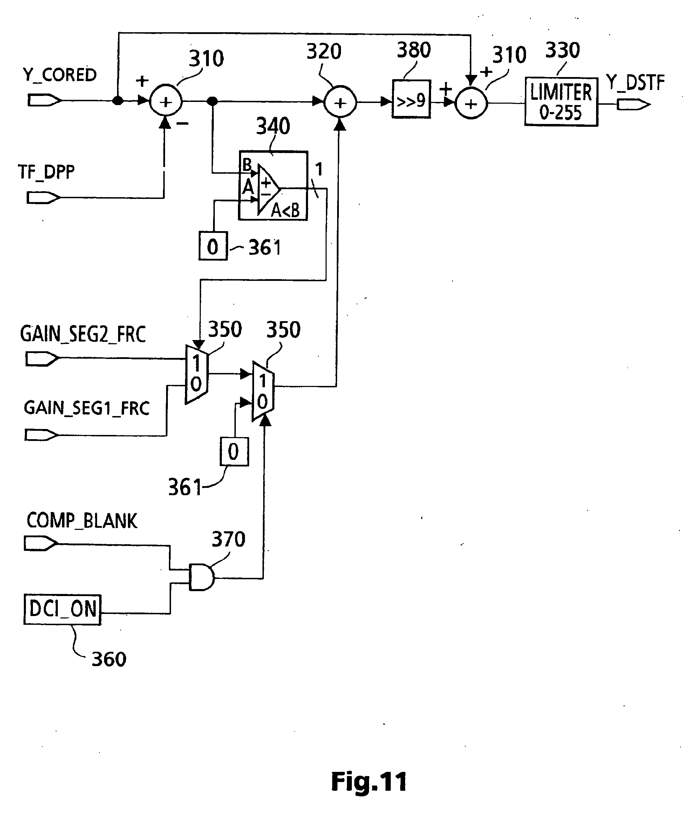

Next the transfer function unit 30 is explained in detail with reference to Fig. 11.

The dynamic contrast improvement video processing is based mainly on the dual segment transfer function. The parameters are provided from the common IIR filter and parameter computation unit 450. The application of the dual segment transfer function can be easily expressed with the following mathematical expressions:

$$for \quad Y\_CORED \le TF\_DPP$$
$$Y\_DSTF = (Y\_CORED - TF\_DPP) * GAIN\_SEG1\_FRC + Y\_CORED$$
$$for \quad Y\_CORED > TF\_DPP$$
$$Y\_DSTF = (Y\_CORED - TFD\_PP) * GAIN\_SEG2\_FRC + Y\_CORED$$

| | | |
|---|---|---|
| Y_CORED | : | Input signal |
| Y_DSTF | : | Output signal |
| TF_DPP | : | Transfer function dynamic pivot point |
| GAIN_SEG1_FRC | : | Fraction part of first segment (lower segment) gain |
| GAIN_SEG2_FRC | : | Fraction part of second segment (upper segment) gain |

The DCI processing can be switched on and off by the user setting parameter DCI_ON. It is switched off during the horizontal and vertical blanking time via composite blanking signal COMP_BLANK. A hardware implementation of these calculations is shown in Fig. 11 in a self explanatory manner.

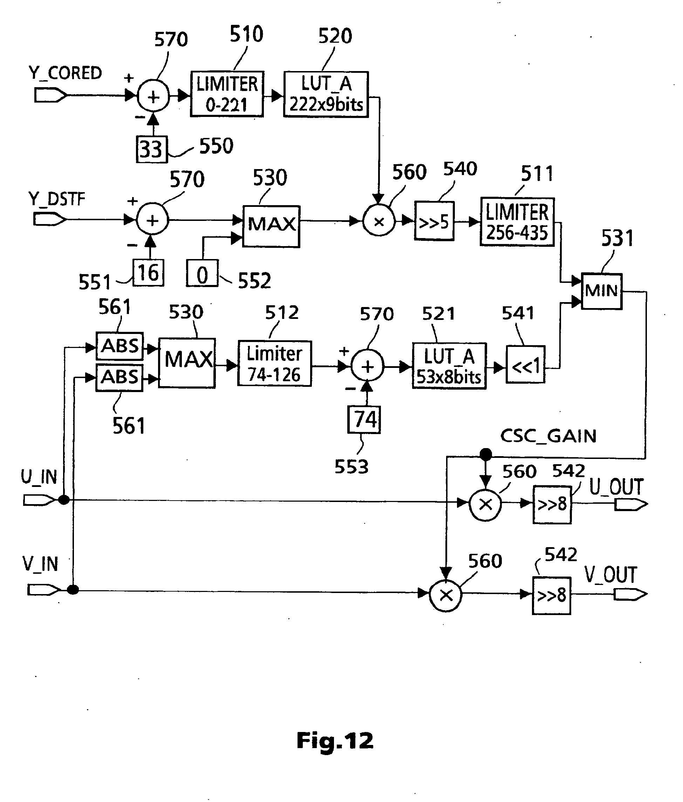

Due to the non linear luminance processing in the transfer function unit the colour saturation is changed. This effect is compensated by multiplication of chrominance samples with a compensation gain. This is done in colour saturation compensation unit 50 which is shown in detail in Fig. 12. The basic function of this unit is expressed in the following formula:

$$GAIN\_CSC = \frac{Y\_DSTF - Y_{bl}}{Y\_CORED - Y_{bl}}$$

wherein

| | | |
|---|---|---|
| Y_CORED | : | Input luminance value of dual segment transfer function |
| Y_DSTF | : | Output luminance value of dual segment transfer function |
| Ybl | : | Black level. |

The expression $1/(Y\_CORED-Y_{bl})$ is approximated by a look-up table 520. The gain value results from the product of $(Y\_DSTF-Y_{bl})*(1/(Y\_CORED-Y_{bl}))$.

The colour saturation compensation is only done for desaturated colours. The desaturation occurs in the second segment from the pivot point up to 100 IRE. In the first segment from 0 IRE up to the pivot point the colour saturation can only be increased. A compensation in this area would fade the colours.

The contents of the look-up table can be given by the following expressions:

$$X = Y\_CORED - Y_{bl} \qquad for \qquad Y\_CORED > TF\_DPP_{min}$$

$$Y\_CORED_{min} = TF\_DPP_{min} + 1$$

$$X_{min} = Y\_CORED_{min} - Y_{bl}$$

$$ROM\_Value = \frac{2^n}{X}$$

$$ROM\_Address = X - X_{min} \qquad for \quad X \geq X_{min}$$

n is the number of fraction bits and determines the precision of approximation.

for Xmin=17 and Xmax=238

| X=Y_CORED-Ybl | ROM_Address=X-Xmin | ROM_Value=(2^n)/X |
|---|---|---|
| | | for n = 13 |
| | | |
| 17 | O | 481 |
| 18 | 1 | 455 |
| 19 | 2 | 431 |
| | | |
| | | |
| 236 | 219 | 34 |
| 237 | 220 | 34 |
| 238 | 221 | 34 |

In seldom cases the compensated chrominance component values can exceed the maximum range representable with the given number of bits. Therefore, the maximum allowed colour compensation gain is computed for each chrominance sample with the components absolute value calculator 561, maximum selector 530, limiter 512, adder 570, constant memory 553, look-up table 521 and bit shifter 541. The colour saturation compensation gain is limited by using the look up table 521 if it is higher than the allowed value so that a perceptible tint error is avoided.

Next, some details concerning the noise estimator 60 are explained. The coring threshold SNR used in the adaptive signal splitter part determines the amount of high frequency small signal amplitude suppression in the processed luminance signal. It is desirable to have for low noise video material small coring levels and for noisy video material large coring levels. The system performance can be optimised by controlling the coring levels depending on the noise level in the video material. The noise is measured by the noise estimator 60.

The noise estimator estimates the noise level in the active portion of the video signal. Normally in each picture there are small blocks with minimum change of video contents.

These blocks are suitable for noise measurement. The pixels of successive fields representing nearly the same spatial location are normally highly correlated and the absolute difference provides a noise information. Due to the statistical variation of noise an averaging of noise levels is necessary. Each filed is subdivided into small blocks of 64 pixels. The absolute difference of pixels between successive fields is averaged over each block. The blocks containing spatial and/or temporal changes do not provide the correct noise level. Their consideration would provide a noise level

9

much higher than the present noise. Therefore the block with the minimum noise level is taken for the noise estimation. This is expressed in the formula given below.

$$Noise\_level = \min\left(Noise\_level, \sum_{j=0}^{63} abs(X_j - Xpf_j)\right)$$

wherein

| Xpixel | : | Pixel j of current field |
| Xpf | : | Pixel j of previous field. |

The new dynamic contrast improvement method and apparatus will be mainly used in video display devices like direct view TV sets or projection TV sets. In plasma and LCD display applications its use brings the best benefit.

The new dynamic contrast improvement method has been explained in detail with block diagrams for hardware implementations. It goes without saying that instead of the disclosed block diagram corresponding software implementations could be used.

The invention is not restricted to the disclosed embodiments. Various modifications are possible and are considered to fall within the scope of the claims. E.g. a somewhat total different transfer function than the dual segment transfer function may be used. More specifically the given restrictions concerning the location of the pivot point may be modified. The whole dynamic contrast improvement method and apparatus is adapted to a framewise processing organisation. This could be changed to fieldwise processing organisation.

**Claims**

1. Method for dynamic contrast improvement of video pictures comprising the steps of analysing the video pictures framewise or fieldwise in real time regarding their picture content and adjusting the parameters (TF_DPP, GAIN_SEG1_FRC, GAIN_SEG2_FRC) of a transfer function (11) which determines the amount of alteration of the luminance and/or chrominance signal of the video picture for contrast improvement, **characterized in that**, a step of adaptive signal splitting is performed in which a noise reduced luminance signal (Y_CORED) is generated which is transformed by means of said transfer function (11), said step of adaptive signal splitting comprising a step of adaptive coring of a high pass component (Y_HP) of the luminance signal with the coring level being adaptive to an estimate of the signal to noise ratio of the luminance signal.

2. Method according to claim 1, wherein the step of adaptive signal splitting further includes a low pass filtering step, in which the luminance signal (Y_IN) of the video picture is filtered, the low pass component (Y_LP) of the luminance signal being used for image analysis.

3. Method according to claim 1 or 2, wherein the signal component, which is cut in the adaptive coring step is added to the transformed luminance signal that was transformed with said transfer function (11).

4. Method according to one of claims 1 to 3, wherein a color saturation compensation step is performed, which compensates for the color saturation effect due to the non-linear processing of the luminance component when performing the transformation step with the adapted transfer function.

5. Method according to claim 4, wherein the color saturation compensation gain CSC-GAIN is determined by the following formula:

```
CSC_GAIN = Y_PWL / Y_CORED
```

wherein Y_PWL is the luminance output signal after applying a dual segment transfer function to the luminance component and Y_CORED is the input luminance signal component to which the transfer function (11) is applied.

**EP 1 372 340 B1**

6. Method according to claim 4 or 5, wherein for every chrominance data pair U and V a maximum allowed colour saturation compensation gain CSC_GAINmax is computed as given by the formula:

$$\texttt{CSC\_GAINmax = max\_value/max(abs(U), abs(V))}$$

wherein the max_value is constant for a given chroma value bit representation, and Max(abs(U), abs(V)) stands for the maximum absolute value of a chroma data pair.

7. Apparatus for dynamic contrast improvement of video pictures comprising:

an image analysis unit (40) wherein the video pictures are analysed frame wise or field wise regarding to their picture content and
a transfer function adaptation unit (30) wherein the transfer function (11) for the luminance and/or chrominance signal of the video pictures is adapted dependent on the results of the image analysis unit (40),
**characterized in that**
the apparatus is further comprising an adaptive signal splitter (20) in which a noise reduced luminance signal is generated which is processed in the transfer function adaptation unit (30), said adaptive signal splitter comprising an adaptive coring unit (220) in which a high pass component (Y_HP) of the luminance signal (Y_IN) is reduced from noise and small detail signal components, with the coring level being adaptive to an estimate of the signal-to-noise ratio of the luminance signal.

8. Apparatus according to claim 7, wherein the adaptive signal splitter (20) further comprises a low pass filter (210), in which the luminance signal (Y_IN) of the video picture is filtered, the low pass component of the luminance signal being fed to the image analysis unit (40).

9. Apparatus according to claim 7 or 8, wherein the signal component which is cut by the adaptive coring unit (220) is provided at a further output (SMALL_DTL) of the adaptive signal splitter (20) and fed to an adder (70) where it is added to the output signal of the transfer function adaptation unit (30).

10. Apparatus according to one of claims 7 to 9, wherein the apparatus is further comprising a color saturation compensation unit (450) which compensates for the color saturation effect due to the non-linear processing of the luminance component in the transfer function adaptation unit (30).

11. Apparatus according to claim 10, wherein the color saturation compensation gain CSC-GAIN is determined by the following formula:

$$\texttt{CSC\_GAIN = Y\_PWL / Y\_CORED}$$

wherein Y_PWL is the luminance output signal after applying a dual segment transfer function to the luminance component and Y_CORED is the input luminance signal component to which the transfer function (11) is applied.

12. Apparatus according to claim 10 or 11, wherein for every chrominance data pair U and V a maximum allowed colour saturation compensation gain CSC_GAINmax is computed as given by the formula:

$$\texttt{CSC\_GAINmax = max\_value/max(abs(U), abs(V))}$$

wherein the max_value is constant for a given chroma value bit representation, and Max(abs(U), abs(V)) stands for the maximum absolute value of a chroma data pair.

13. Apparatus according to one of claims 7 to 12, wherein the image analysis unit (40) comprises one or more of the following components:

- an average brightness analysis unit (410),
- a dark sample distribution analysis unit (420),
- a peak analysis unit (430).

**14.** Apparatus according to claim 13, wherein the peak analysis unit (430) includes a number of counters (4380) which count pixel values lying above corresponding thresholds (thr-00 - thr_15) and wherein the counting results are summed up for peak value determination.

**Patentansprüche**

**1.** Verfahren zur dynamischen Kontrastverbesserung von Videobildern, umfassend die Schritte der Analyse der Videobilder Vollbild für Vollbild oder Halbbild für Halbbild in Echtzeit unter Berücksichtigung ihres Bildinhalts, und Einstellung der Parameter (TF_DPP, GAIN_SEG1_FRC, GAIN_SEG2_FRC) einer TransferFunktion (11), die das Änderungs-Maß des Luminanz-oder Chrominanz-Signals des Videobildes für Kontrastverbesserung bestimmt, **dadurch gekennzeichnet, dass** ein Schritt von adaptiver Signalspaltung ausgeführt wird, bei dem ein rauschvermindertes Luminanzsignal (Y_CORED) erzeugt wird, das mittels der Transferfunktion (11) transformiert wird, wobei der Schritt der adaptiven Signalspaltung einen Schritt von adaptiver Entkernung (coring) einer Hochpasskomponente (Y_HP) des Luminanzsignals umfasst, wobei der Entkernungspegel an eine Abschätzung des Rauschabstandes des Luminanzsignals anpassbar ist.

**2.** Verfahren nach Anspruch 1, bei dem der Schtitt der adaptiven Signalspaltung ferner einen Tiefpassfilterschritt umfasst, bei dem das Luminanzsignal (Y_IN) des Videobildes gefiltert wird, wobei die Tiefpasskomponente (Y_LP) des Luminanzsignals zur Bildanalyse verwendet wird.

**3.** Verfahren nach Anspruch 1 oder 2, bei dem die Signalkomponente, die bei dem adaptiven Entkernungsschritt abgeschnitten wird, dem transformierten Luminanzsignal hinzugefügt wird, das mit der Transferfunktion (11) transformiert wurde.

**4.** Verfahren nach einem der Ansprüche 1 bis 3, bei dem ein Farbsättigungs-Kompensationsschritt ausgeführt wird, der den Farbsättigungseffekt aufgrund der nicht-linearen Verarbeitung der Luminanzkomponente kompensiert, wenn der Transformationsschritt mit der angepassten Transferfunktion ausgeführt wird.

**5.** Verfahren nach Anspruch 4, bei dem der Farbsättigungs-Kompensationsgewinn CSC-GAIN durch die folgende Formel bestimmt wird

$$\text{CSC\_GAIN} = \text{Y\_PWL} / \text{Y\_CORED},$$

worin Y_PWL das Luminanz-Ausgangssignal nach Anwendung einer Doppelsegment-Transferfunktion auf die Luminanzkomponente ist und Y_CORED die Eingangssignal-Luminanzkomponente ist, auf die die Transferfunktion (11) angewendet wird.

**6.** Verfahren nach Anspruch 4 oder 5, bei dem für jedes Chrominanz-Datenpaar U und V ein maximal zulässiger Farbsättigungs-Kompensationsgewinn CSC_GAINmax berechnet wird, der durch die Formel gegeben ist:

$$\text{CSC\_GAINmax} = \text{max\_Wert}/\max(\text{abs}(U), \text{abs}(V)),$$

worin der max_Wert für eine gegebene Chroma-Wert-Bit-Darstellung konstant ist und Max(abs(U), abs(V)) für den maximalen Absolutwert eines Chroma-Datenpaares stehen.

7. Vorrichtung zur dynamischen Kontrastverbesserung von Videobildern umfassend:

eine Bild-Analyseeinheit (40), in der die Videobilder Vollbild für Vollbild oder Halbbild für Halbblild hinsichtlich ihres Bildinhalts analysiert werden und
eine Transferfunktions-Anpassungseinheit (30), in der die Transferfunktion (11) für das Luminanz-und/oder das Chrominanzsignal der Videobilder in Abhängigkeit von den Ergebnissen der Bild-Analyseeinheit (40) angepasst wird, **dadurch gekennzeichnet, dass** die Vorrichtung ferner einen adaptiven Signalspalter (20) umfasst, in dem ein rauschvermindertes Luminanzsignal erzeugt wird, das in der Transferfunktions-Anpassungseinheit (30) verarbeitet wird, wobei der adaptive Signalspalter eine adaptive Entkernungseinheit (220) umfasst, in der eine Hochpasskomponente (Y_HP) des Luminanzsignals (Y_IN) hinsichtlich Rauschen und Signalkomponenten mit kleinen Einzelheiten vermindert wird, wobei der Entkernungspegel an eine Abschätzung des Rauschabstandes des Luminanzsignals anpassbar ist.

8. Vorrichtung nach Anspruch 7, bei der der adaptive Signalspalter (20) ferner ein Tiefpassfilter (210) umfasst, in dem das Luminanzsignal (Y_IN) des Videobildes gefiltert wird, wobei die Tiefpasskomponente des Luminanzsignals der Bild-Analyseeinheit (40) zugeführt wird.

9. Vorrichtung nach Anspruch 7 oder 8, bei der die Signalkomponente, die von der adaptiven Entkernungseinheit (220) abgeschnitten wird, an einem weiteren Ausgang (SMALL_DTL) des adaptiven Signalspalters (20) vorgesehen ist und einer Additionsschaltung (70) zugeführt wird, wo sie dem Ausgangssignal der Transferfunktions-Anpassungseinheit (30) hinzugefügt wird.

10. Vorrichtung nach einem der Ansprüche 7 bis 9, die ferner eine Farbsättigungs-Kompensationseinheit (450) umfasst, die den Farbsättigungseffekt aufgrund der nicht-linearen Verarbeitung der Luminanzkomponente in der Transferfunktions-Anpassungseinheit (30) kompensiert.

11. Vorrichtung nach Anspruch 10, bei der der Farbsättigungs-Kompensationsgewinn CSC-GAIN durch die folgende Formel bestimmt ist

$$\text{CSC\_GAIN} = \text{Y\_PWL} / \text{Y\_CORED},$$

worin Y_PWL das Luminanz-Ausgangssignal nach Anwendung einer Doppelsegment-Transferfunktion bei der Luminanzkomponente ist, und Y_CORED die Eingangssignal-Luminanzkomponente ist, bei der die Transferfunktion (11) angewendet wird.

12. Vorrichtung nach einem der Ansprüche 10 oder 11, bei der für jedes Chrominanz-Datenpaar U und V ein maximal zulässiger Farbsättigungs-Kompensationsgewinn CSC_GAINmax berechnet wird, der durch die Formel gegeben ist:

$$\text{CSC\_GAINmax} = \text{max\_Wert}/\max(\text{abs}(U), \text{abs}(V)),$$

worin der max_Wert für eine gegebene Chrominanz-Bit-Darstellung konstant ist und Max (abs(U), abs(V)) für den maximalen absoluten Wert eines Chrominanz-Datenpaares stehen.

13. Vorrichtung nach einem der Ansprüche 7 bis 12, bei der die Bild-Analyseeinheit (40) eine oder mehrere der folgenden Komponenten umfasst:

- eine Analyseeinheit (410) für die Durchschnitts-Helligkeit,
- eine Dunkel-Abtast-Verteilungs-Analyseeinheit (420),
- eine Spitzen-Analyseeinheit (430).

14. Vorrichtung nach Anspruch 13, bei der die Spitzen-Analyseeinheit (430) eine Anzahl von Zählern (4380) enthält, die Pixelwerte zählen, die oberhalb entsprechender Schwellwerte (thr-00 - thr_15) liegen, und bei der die Zählergebnisse für die Spitzenwertbestimmung aufaddiert werden.

**Revendications**

1. Méthode d'amélioration dynamique du contraste d'images vidéo comprenant les étapes d'analyse des images vidéo, au niveau de la trame ou du champ, en temps réel en ce qui concerne leur contenu d'image et d'ajustement des paramètres (TF_DPP, GAIN_SEG1_FRC, GAIN_SEG2_FRC) d'une fonction de transfert (11) qui détermine la quantité de modification du signal de luminance et/ou de chrominance de l'image vidéo pour l'amélioration du contraste, **caractérisée en ce que**, une étape d'aiguillage de signal adaptatif est effectuée, dans laquelle un signal de luminance à bruit réduit (Y_CORED) est généré, lequel est transformé au moyen de ladite fonction de transfert (11), ladite étape d'aiguillage de signal adaptatif comprenant une étape de carottage adaptatif d'une composante passe-haut (Y_HP) du signal de luminance, le niveau de carottage étant adaptatif à une estimation du rapport signal sur bruit du signal de luminance.

2. Méthode selon la revendication 1, dans laquelle l'étape d'aiguillage de signal adaptatif inclut en outre une étape de filtrage passe-bas, dans laquelle le signal de luminance (Y_IN) de l'image vidéo est filtré, la composante passe-bas (Y_LP) du signal de luminance étant utilisée pour l'analyse d'image.

3. Méthode selon la revendication 1 ou 2, dans laquelle la composante du signal qui est retirée lors de l'étape de carottage adaptatif, est ajoutée au signal de luminance transformé par ladite fonction de transfert (11).

4. Méthode selon l'une des revendications 1 à 3, dans laquelle une étape de compensation de saturation chromatique est effectuée, laquelle compense l'effet de saturation chromatique dû au traitement non-linéaire du composant luminance lors de la réalisation de l'étape de transformation au moyen de la fonction de transfert adaptée.

5. Méthode selon la revendication 4, dans laquelle le gain de compensation de saturation chromatique CSC_GAIN est déterminé par la formule suivante :

$$CSC\_GAIN = Y\_PWL / Y\_CORED$$

dans laquelle Y_PWL est le signal de sortie de luminance après l'application de la fonction de transfert de segment double au composant luminance et Y_CORED est la composante du signal de luminance d'entrée à laquelle la fonction de transfert (11) est appliquée.

6. Méthode selon la revendication 4 ou 5, dans laquelle, pour chaque paire de données de chrominance U et V, un gain maximal de compensation de saturation chromatique autorisé CSC_GAINmax est calculé selon la formule :

$$CSC\_GAINmax = valeur\_max/max(abs(U), abs(V))$$

dans laquelle la valeur_max est constante pour une représentation de bits de valeur de chroma donnée, et Max (abs(U), abs(V)) désigne la valeur absolue maximale d'une paire de données chroma.

7. Appareil d'amélioration dynamique du contraste d'images vidéo comprenant :

une unité d'analyse d'image (40), dans laquelle les images vidéo sont analysées au niveau de la trame ou du champ en ce qui concerne leur contenu d'image et
une unité d'adaptation de la fonction de transfert (30), dans laquelle une fonction de transfert (11) pour le signal de luminance et/ou de chrominance des images vidéo est adaptée en fonction des résultats de l'unité d'analyse d'image (40),
**caractérisé en ce que**
l'appareil comprend en outre un dispositif d'aiguillage de signaux adaptatif (20) dans lequel un signal de luminance à bruit réduit est généré, lequel est traité dans l'unité d'adaptation de la fonction de transfert (30), ledit dispositif d'aiguillage de signaux adaptatif comprenant une unité de carottage adaptatif (220) dans laquelle une composante passe-haut (Y_HP) du signal de luminance (Y_IN) se voit retirer des composantes de signal de bruit et de petits détails, le niveau de carottage étant adaptatif à une estimation du rapport signal sur bruit du signal de luminance.

**8.** Appareil selon la revendication 7, dans lequel le dispositif d'aiguillage de signaux adaptatif (20) comprend en outre un filtre passe-bas (210), dans lequel le signal de luminance (Y_IN) de l'image vidéo est filtré, la composante passe-bas du signal de luminance étant fournie à l'unité d'analyse d'image (40).

**9.** Appareil selon la revendication 7 ou 8, dans lequel la composante du signal qui est retirée par l'unité de carottage adaptatif (220) est générée au niveau d'une autre sortie (SMALL_DTL) du dispositif d'aiguillage de signaux adaptatif (20) et fournie à un additionneur (70) dans lequel elle est ajoutée au signal de sortie de l'unité d'adaptation de la fonction de transfert (30).

**10.** Appareil selon l'une des revendications 7 à 9, dans lequel l'appareil comprend en outre une unité de compensation de saturation chromatique (450) qui compense l'effet de saturation chromatique dû au traitement non-linéaire du composant luminance dans l'unité d'adaptation de la fonction de transfert (30).

**11.** Appareil selon la revendication 10, dans lequel le gain de compensation de saturation chromatique CSC_GAIN est déterminé par la formule suivante :

$$CSC\_GAIN = Y\_PWL \ / \ Y\_CORED$$

dans laquelle Y_PWL est le signal de sortie de luminance après l'application d'une fonction de transfert de segment double au composant luminance et Y_CORED est la composante du signal de luminance d'entrée à laquelle la fonction de transfert (11) est appliquée.

**12.** Appareil selon la revendication 10 ou 11, dans lequel, pour chaque paire de données de chrominance U et V, un gain maximal de compensation de saturation chromatique autorisé CSC_GAINmax est calculé selon la formule :

$$CSC\_GAINmax = valeur\_max/max(abs(U), \ abs(V))$$

dans laquelle la valeur_max est constante pour une représentation de bits de valeur de chroma donnée, et Max (abs(U), abs (V)) désigne la valeur absolue maximale d'une paire de données chroma.

**13.** Appareil selon l'une des revendications de 7 à 12, dans lequel l'unité d'analyse d'image (40) comprend au moins l'un des éléments suivants:

- une unité d'analyse de la luminance moyenne (410),
- une unité d'analyse de distribution d'échantillons sombres (420),
- une unité d'analyse de crête (430).

**14.** Appareil selon la revendication 13, dans lequel l'unité d'analyse de crête (430) inclut plusieurs compteurs (4380) qui comptent les valeurs de pixel situées au dessus des seuils correspondants (thr-00 - thr_15) et dans lesquels les résultats du comptage sont ajoutés pour déterminer la valeur de crête.

**Fig.1**

**Fig.2**

**Fig.3**

**Fig.4**

**Fig.5**

Y_LP

410

ABA
enable reset

450

440

W_US

AWS

420

DSDA
enable reset

IIRF

&

PC

TF_DPP

GAIN_SEG1_FRC

W_PFS

430

PA
enable reset

GAIN_SEG2_FRC

FR_RES

**Fig.6**

Y_LP

4320

4330

4310

4340

Peak
Register
8bits
reset

LIMITER
MINPK  MAXPK

FR_P

1
0

Max

4350  0

ENABLE_ANLY

4361

4360

FR_RES

**Fig.9**

**Fig.7**

**Fig.8**

**Fig.10**

**Fig.11**

**Fig.12**